# EUROPÄISCHE PATENTSCHRIFT

(11) **EP 1 620 305 B1**
(45) Veröffentlichungstag und Bekanntmachung des Hinweises auf die Patenterteilung: **27.09.2006**
(21) Anmeldenummer: 04731284.8
(22) Anmeldetag: 06.05.2004
(51) Int. Cl.: B62D 57/028, E02F 9/04

(54) **GELÄNDEGÄNGIGES FAHRZEUG MIT SCHREITGLIEDERN**
OFF-ROAD VEHICLE COMPRISING AMBULATORY LIMBS
VEHICULE TOUT-TERRAIN A MEMBRES MARCHANTS

(30) Priorität: 07.05.2003 AT 6832003
(43) Veröffentlichungstag der Anmeldung: 01.02.2006
(73) Patentinhaber: Konrad, Josef, 9451 Preitenegg (AT)
(72) Erfinder: Konrad, Josef, 9451 Preitenegg (AT)
(74) Vertreter: Hehenberger, Reinhard
(86) Internationale Anmeldenummer: PCT/AT2004/000156
(87) Internationale Veröffentlichungsnummer: WO 2004/098985

(56) Entgegenhaltungen:
- AT-B- 292 581
- DE-A- 1 900 822
- US-A- 3 335 809
- US-A- 4 310 975
- PATENT ABSTRACTS OF JAPAN Bd. 0130, Nr. 76 (M-800), 21. Februar 1989 (1989-02-21) -& JP 63 275486 A (KOBE STEEL LTD), 14. November 1988 (1988-11-14)

## Beschreibung

Die Erfindung betrifft ein Fahrzeug mit einem Fahrzeugrahmen, einem Antriebsaggregat, einer Achskonstruktion mit Rädern oder Kettenlaufwerken und mit etwa parallel zum Untergrund teleskopierbaren Rohren, die jeweils aus einem Fixrohr und einem Verschieberohr aufgebaut sind, wobei am freien Ende der Verschieberohre jeweils ein Stützelement angeordnet ist.

Aus der AT 292581 ist ein gattungsgemäßer Bagger bekannt, der einerseits über Räder und andererseits über Stützfüße am Boden steht. Die Stützfüße können von Hand teleskopisch verlängert und verkürzt werden.

Aus der US 3,335,809 A ist ein Fahrzeug für Erdarbeiten bekannt, das über vier Räder am Boden steht. Zwei Fahrzeugrahmenteile, an denen die Räder bzw. die Radachsen angeordnet sind, sind über einen hydraulisch angetriebenen, teleskopisch verlängerbaren Mittelteil miteinander verbunden. Des Weiteren sind den Rädern noch Stützelemente zugeordnet, die am jeweiligen Fahrzeugteil verschwenkbar gelagert sein können.

Diese und andere bekannte Schreitfahrzeuge haben den Nachteil, dass bedingt durch die Anordnung der Schreitglieder und der zugehörigen Hydraulikelemente eine Fortbewegung des Fahrzeuges mit konstanter Geschwindigkeit nicht ohne Weiteres möglich ist und damit für eine schnellere Fortbewegung des Fahrzeuges, beispielsweise zur Überstellung an den Einsatzort in unwegsamem Gelände, ein weiteres Fahrzeug zum Transport erforderlich ist. Durch die Anordnung mehrerer Hydraulikzylinder können die Schreitglieder zwar abwechselnd angehoben, abgesenkt und bewegt werden, jedoch muss die Bedienungsperson sehr viele Betätigungselemente bedienen, um auch nur eine geringe Vorschubbewegung des Fahrzeuges zu erreichen.

Der Erfindung liegt somit die Aufgabe zugrunde, diesen Mangel zu beheben und ein geländegängiges Fahrzeug der angegebenen Art vorzuschlagen, das auch für eine gleichförmige Fortbewegung im Bereich von zum Beispiel 0 bis 5 km/h geeignet ist. Auf straßenähnlichem Untergrund sollte auch eine höhere Geschwindigkeit erreicht werden.

Die Aufgabe wird bei einem gattungsmäßigen Fahrzeug dadurch gelöst, dass der Fahrzeugrahmen im Wesentlichen aus den zwei etwa parallel zum Untergrund teleskopierbaren Rohren besteht, die parallel zueinander angeordnet sind und Schreitglieder bilden, dass die Verschieberohre in den Fixrohren mechanisch oder hydraulisch abwechselnd oder zugleich ausfahrbar und einziehbar sind und dass die Stützelemente in der Ebene der Längsachse des teleskopierbaren Rohres um einen Lagerpunkt drehbar gelagert sind.

Durch das Vorsehen von parallel zum Untergrund teleskopierbaren Rohren ist es möglich, eine Vorschubbewegung über einen größeren Verschiebeweg zu erreichen. Beim abwechselnden Ausschieben des einen Rohres und Einziehen des anderen Rohres sollte das Einziehen mit einer höheren Geschwindigkeit erfolgen als das Ausschieben. Ist das Rohr eingezogen, wird das Stützelement abgesenkt, gleichzeitig über eine Stützplatte oder ein Rad im Boden verankert und das Rohr wieder ausgeschoben. Es besteht somit immer eine Dreipunktabstützung des Fahrzeuges während der Fortbewegung.

Zur gleichförmigen Fortbewegung auf nicht zu steilem Untergrund, beispielsweise einer Fahrbahn, kann auch vorgesehen sein, dass an zumindest einem Stützelement ein freilaufendes und blockierbares oder angetriebenes Rad oder eine Raupe montiert ist, das oder die gegebenenfalls lenkbar ist.

Der Antrieb des Fahrzeuges erfolgt in diesem Fall mittels einer angetriebenen und lenkbaren Achse.

Die Achskonstruktion kann im Rahmen der Erfindung Räder oder Raupen im Bereich des freien Endes der Fixrohre aufweisen.

Eine Achsenkonstruktion, die an den Fixrohren gelenkig angeordnet ist bietet den Vorteil, dass das Fahrzeug auch an Hängen quer zur bestehenden Hangneigung annähernd waagrecht positioniert werden kann.

In einer bevorzugten Ausführungsform der Erfindung kann vorgesehen sein, dass die Winkelgeschwindigkeit der Räder bzw. die Antriebsgeschwindigkeit der Raupen und die Schreitgeschwindigkeit der Schreitelemente, d. h. der Verschieberohre und Stützelemente, mittels einer zuschaltbaren Steuerelektronik aufeinander abstimmbar sind.

Mit einer zuschaltbaren Steuerelektronik ist es möglich, die Bewegung der Schreitglieder auf die Winkelgeschwindigkeit der angetriebenen Achse derart abzustimmen, dass eine gleichförmige Vorwärtsbewegung erzielt werden kann, ohne den Fahrzeugführer mit der Handhabung mehrerer Betätigungselemente zu belasten. Das Fahrzeug kann damit eine gleichförmige Geschwindigkeit erreichen.

Die Anordnung eines an den freien Enden der Fixrohre gelenkig angeordneten Oberwagens erlaubt eine einfach zu verwirklichende Ausstattung des Fahrzeuges mit einer Fahrerkabine und einem Kranausleger, an dem beispielsweise ein Harvesterkopf oder eine Baggerschaufel befestigt werden kann. Durch die gelenkige Anordnung des Oberwagens besteht - wie bei der gelenkig angeordneten Achskonstruktion - die Möglichkeit einer waagrechten Ausrichtung der Fahrerkabine und vor allem des Kranauslegers in unwegsamem Gelände, was eine wesentlich einfachere Bedienung der Bearbeitungsmaschinen sicher stellt.

Vorteilhaft ist die Verwendung von vierkantigen Profilen für die teleskopierbaren Rohre, da auf diese Weise eine einfache und stabile Konstruktion des Unterwagens und eine ebene Oberfläche erzielt wird. Für die Anordnung beispielsweise des Antriebsaggregates oder des Kranes ist dadurch kein zusätzliches Konstruktionselement erforderlich.

In den Zeichnungen ist der Erfindungsgegenstand beispielhaft dargestellt. Es zeigt:
Fig. 1 eine Schrägansicht des Fahrzeuges,
Fig. 2 eine Draufsicht auf das Fahrzeug,
Fig. 3 eine Seitenansicht des Fahrzeuges,
Fig. 4 das Fahrzeug bestückt mit einem Harvesterkopf in ebenem Gelände,
Fig. 5 das Fahrzeug bestückt mit einer Ladeplattform,
Fig. 6 das Fahrzeug bestückt mit einer Baggerschaufel und ausgefahrenen Teleskoprohren,
Fig. 7 bis 10 das Fahrzeug beim Überwinden eines Hindernisses,
Fig. 11 und 12 eine Drehbewegung des Fahrzeuges mit Unterstützung durch den Kranausleger und
Fig. 13 das Fahrzeug mit Rädern bei der Fahrt auf einer ebenen Fahrbahn.

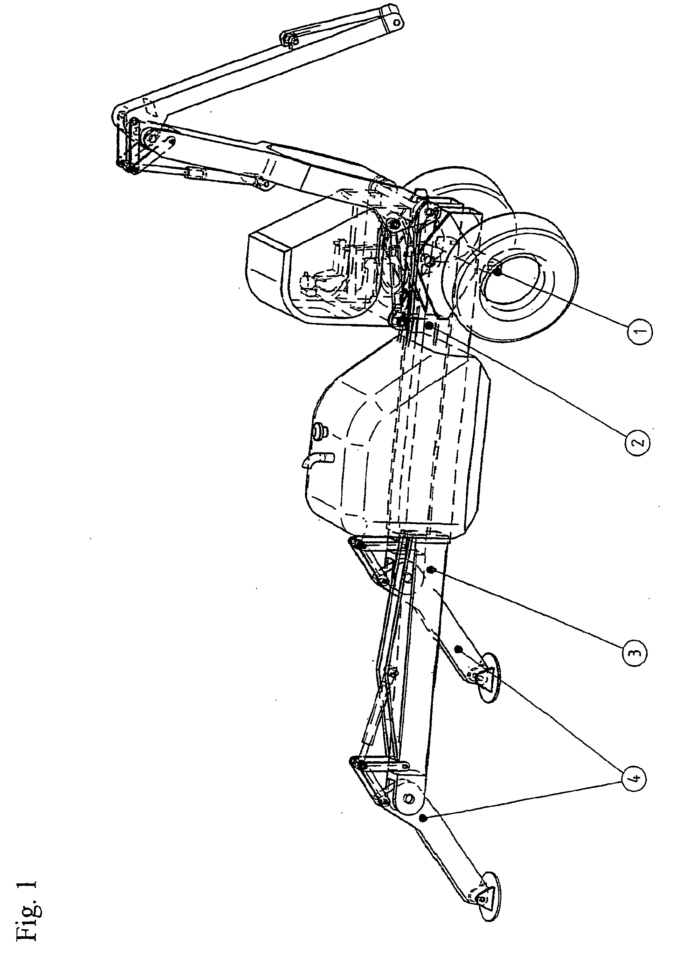

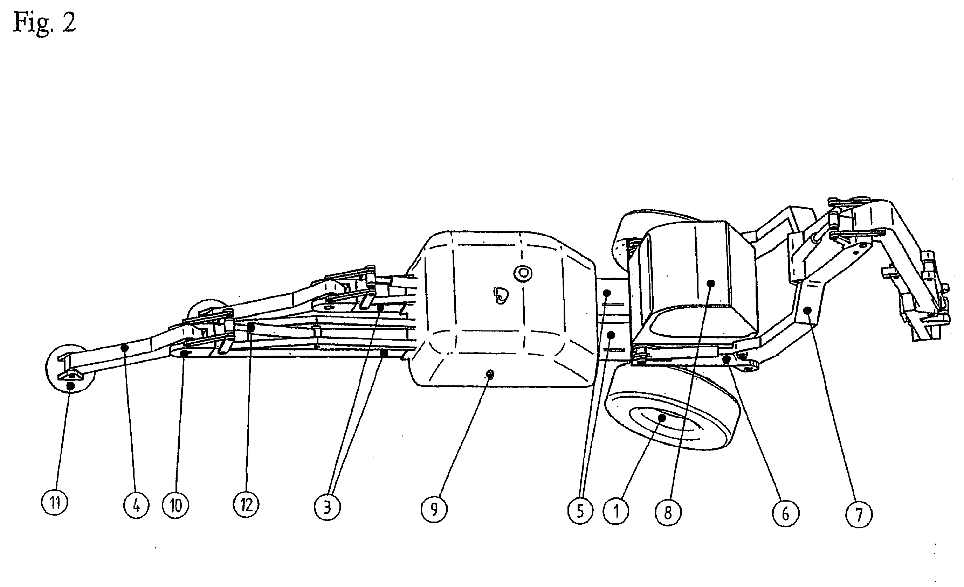

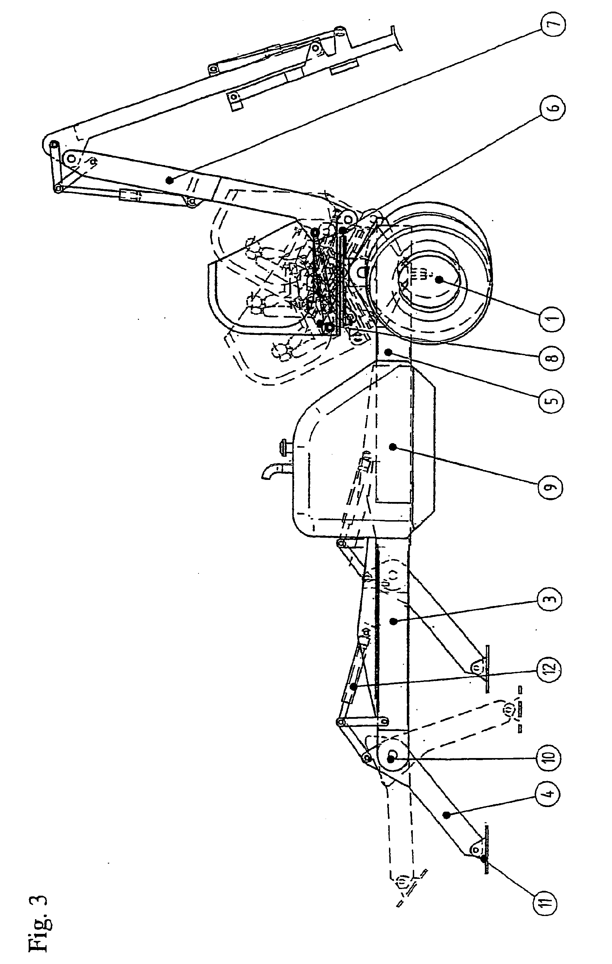

Fig. 1 bis 3 ist zu entnehmen, dass der Fahrzeugrahmen 2 des Fahrzeuges im Wesentlichen aus zwei teleskopierbaren Rohren besteht, die jeweils aus einem Fixrohr 5 und einem Verschieberohr 3 aufgebaut sind. Für die Rohrelemente werden Vierkantprofile verwendet. In den beiden Fixrohren 5 werden die Verschieberohre 3 hydraulisch oder mechanisch, gleichzeitig oder abwechselnd linear vor oder zurück bewegt.

Am freien Ende der Verschieberohre 3 ist jeweils ein Stützelement 4 angeordnet, das in der Ebene der Längsachse des teleskopierbaren Rohres um einen Lagerpunkt 10 drehbar gelagert ist. Die Stützelemente 4 sind mittels Hydraulikzylindern 12 anhebbar bzw. absenkbar und an den Stützelementen 4 sind in den Untergrund eingreifende Stützplatten 11 befestigt. Fig. 13 zeigt, dass an Stelle der Stützplatten 11 an zumindest einem Stützelement 4 ein Rad oder eine Raupe befestigt werden kann, um auf etwa ebenem, fahrbahnartigem Untergrund eine Fortbewegung mit höherer Geschwindigkeit zu ermöglichen.

Bei der Bewegung mit abwechselnd aus- und einfahrenden Verschieberohren 3 wird das Stützelement 4 beim Ausfahren gesperrt und das Fahrzeug parallel verschoben. Beim Einfahren, das gleichzeitig etwas schneller während des Ausfahrens des anderen Verschieberohres 3 erfolgt, ist das Stützelement 4 lose und kann somit über Hindernisse oder Unebenheiten gezogen werden oder auch mittels des Hydraulikzylinders 12 angehoben werden. Nach dem Einfahren des Verschieberohres 3 wird das Stützelement 4 für das Ausfahren abgesetzt, mit der Stützplatte 11 fixiert und erneut beim gleichzeitigen Einziehen des anderen Verschieberohres 3 wieder ausgefahren. Mit dieser Konstruktion ist nicht nur eine gleichbleibende Geschwindigkeit gewährleistet, sondern durch das Parallelverschieben der Verschieberohres 3 auch eine gleichbleibende Höhe des Rahmens über dem Untergrund gewährleistet.

Am Fahrzeugrahmen 2 ist die Achskonstruktion - mit zwei Rädern oder Kettenlaufwerken - fest oder gelenkig im Bereich des freien Endes der Fixrohre 5 angeordnet. Die Achskonstruktion kann eine angetriebene oder frei laufende, gelenkte Achse 1 aufweisen. Mittels einer zuschaltbaren Steuerelektronik sind die Winkelgeschwindigkeit der Achse 1 und die Schreitgeschwindigkeit der Schreitelemente, d. h. der Verschieberohre 3 und Stützelemente 4, aufeinander abstimmbar.

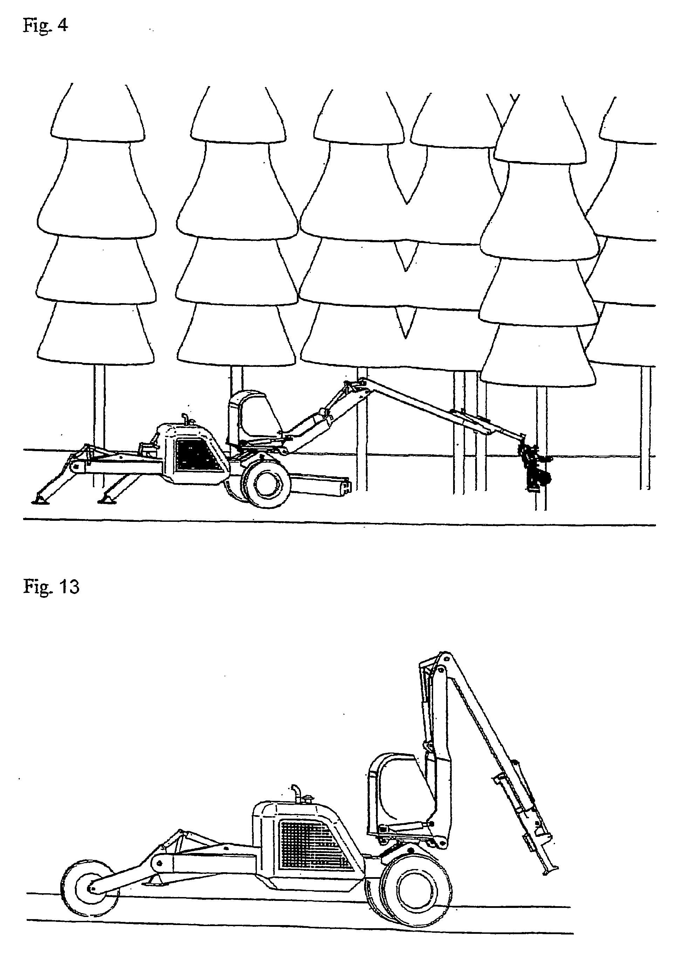

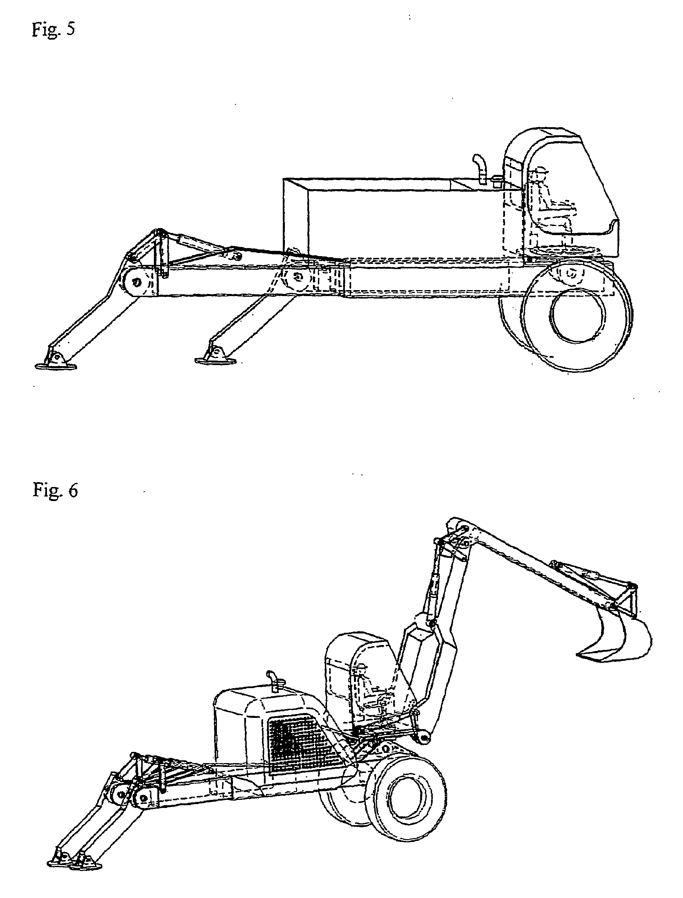

Über der Achskonstruktion ist an den beiden Fixrohren 5 ein Oberwagen 6 gelenkig befestigt. Die Gestaltung des Oberwagens 6 lässt alle Variationsmöglichkeiten offen, sodass dieser mit einem Kranausleger 7 und/oder einer Fahrerkabine 8 ausgerüstet sein kann. Am Kranausleger 7 kann - wie beispielsweise in den Fig. 4 bis 6 dargestellt - eine Baggerschaufel oder ein Harvesterkopf befestigt werden. An dem, dem freien Ende gegenüberliegenden Ende der Fixrohre 5 ist das Antriebsaggregat 9 angeordnet welches aber auch in die Kabinenkonstruktion integriert werden kann. Am Fahrzeugrahmen 2 können auch Zusatzgeräte, wie eine Ladeplattform gemäß Fig.5, angebaut werden.

Der Oberwagen 6 ist oberhalb der: Achskonstruktion mittels eines Drehkranzes oder fix mit dem Fahrzeugrahmen 2 verbunden. Die gelenkige Lagerung der Achskonstruktion und/oder des Oberwagens 6 erlaubt ein waagrechtes Positionieren des Fahrzeuges oder der Fahrerkabine 8 am Steilhang.

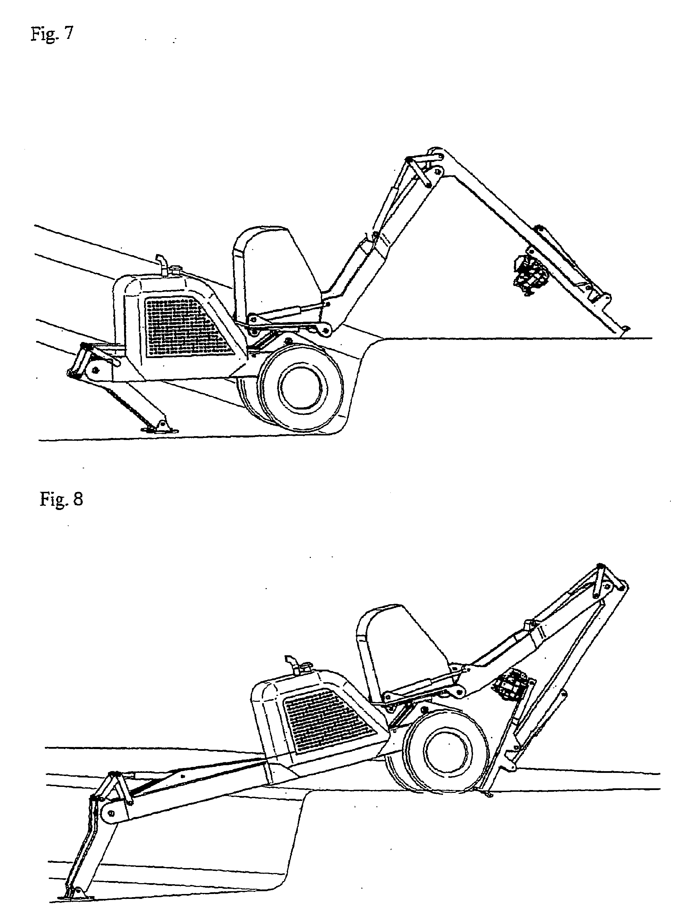

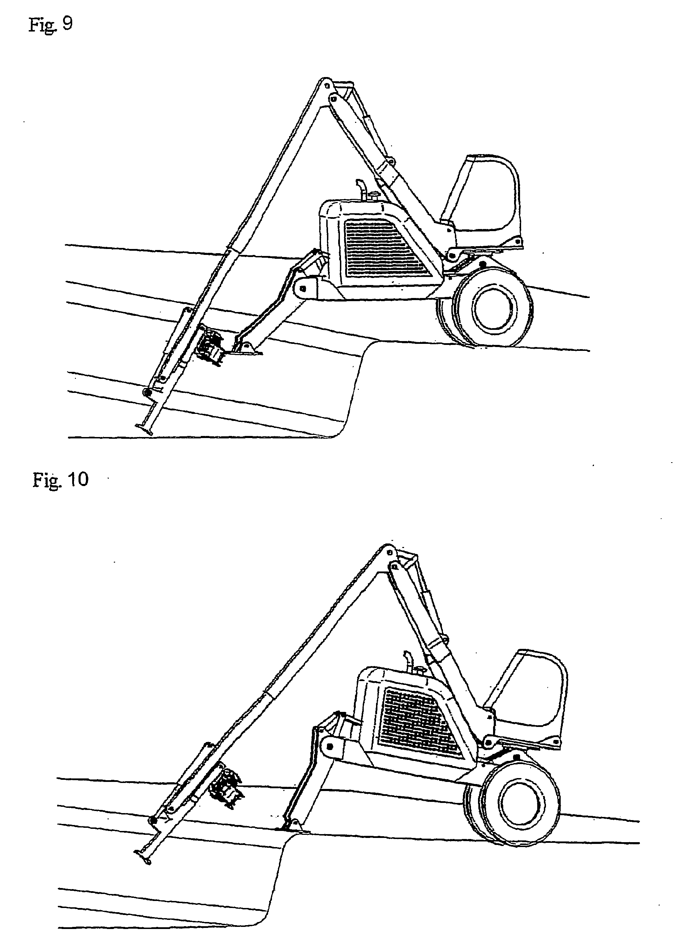

Die Fig. 7 bis 10 zeigen, wie mit dem erfindungsgemäßen Fahrzeug ein Hindernis in Form einer Geländestufe überschritten wird. Zunächst werden die Stützelemente 4 in Richtung zur Fahrzeugvorderseite positioniert und ausgerichtet bzw. der ausgefahrene Kranausleger 7 auf der Geländestufe abgestützt (Fig. 7). Anschließend wird mittels des Kranauslegers 7 das Fahrzeug über die Geländestufe gehoben, wobei zur Unterstützung die Verschieberohre 3 ausgeschoben werden (Fig. 8). Danach wird der Oberwagen 6 mit dem Kranausleger 7 um 180° gedreht, der Kranausleger 7 hinter der Geländestufe abgesetzt und das Fahrzeug hinten angehoben, wodurch die Stützelemente 4 vom Untergrund abheben (Fig. 9). Nach dem Einziehen der Verschieberohre 3 werden die Stützelemente 4 mit den Stützplatten 11 auf der Geländestufe positioniert (Fig. 10) und der Oberwagen wieder um 180° zurück gedreht.

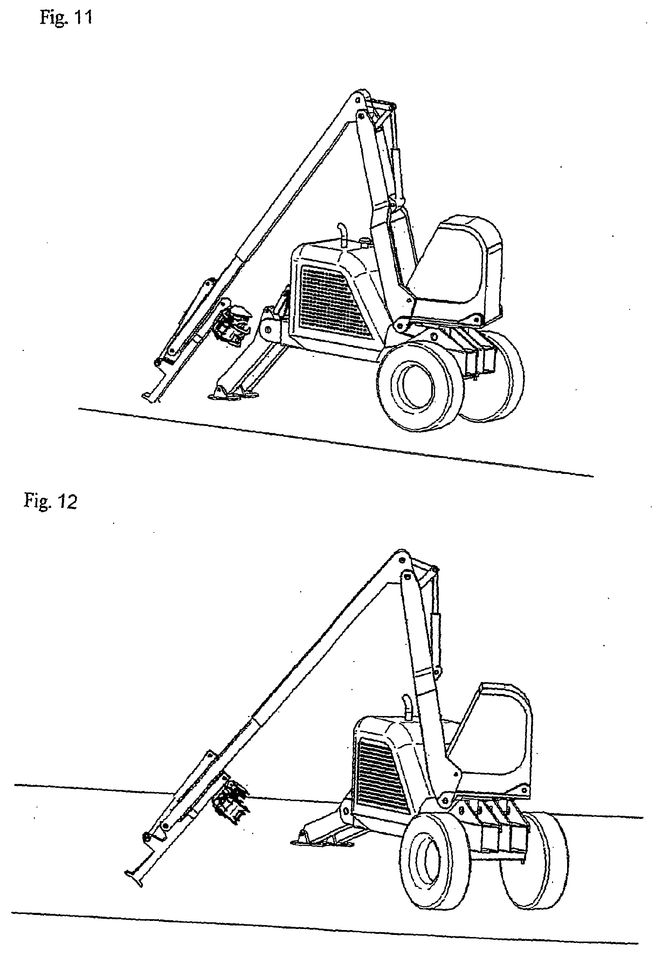

Fig. 11 und 12 beschreiben den Vorgang einer Fahrzeugdrehung um 90° bei festgestellter Achse 1. Mit etwa zur Fahrzeugrückseite ausgerichtetem Oberwagen 6 wird der Kranausleger 7 etwa im Bereich der Stützelemente 4 positioniert. Durch Ausschieben des Kranauslegers 7 wird die Fahrzeugrückseite angehoben und durch Verdrehen des Oberwagens 6 gegenüber dem Fahrzeugrahmen 2 das Fahrzeug um den gewünschten Winkel verdreht (Fig. 11). Anschließend erfolgt nur noch das Abstellen der Stützelemente 4 (Fig. 12) und das Fahrzeug ist in der neuen Richtung wieder fahrbereit. Diese Drehung kann um jeden beliebigen Winkel vorgenommen werden.

## Patentansprüche

1. Geländegängiges Fahrzeug mit einem Fahrzeugrahmen, einem Antriebsaggregat, einer Achskonstruktion mit Rädern oder Kettenlaufwerken und mit etwa parallel zum Untergrund teleskopierbaren Rohren, die jeweils aus einem Fixrohr (5) und einem Verschieberohr (3) aufgebaut sind, wobei am freien Ende der Verschieberohre (3) jeweils ein Stützelement (4) angeordnet ist, **dadurch gekennzeichnet, dass** der Fahrzeugrahmen (2) im Wesentlichen aus den zwei etwa parallel zum Untergrund teleskopierbaren Rohren besteht, die parallel zueinander angeordnet sind und Schreitglieder bilden, dass die Verschieberohre (3) in den Fixrohren (5) mechanisch oder hydraulisch (3) abwechselnd oder zugleich ausfahrbar und einziehbar sind und dass die Stützelemente (4) in der Ebene der Längsachse des teleskopierbaren Rohres um einen Lagerpunkt (10) drehbar gelagert sind.

2. Fahrzeug nach Anspruch 1, **dadurch gekennzeichnet, dass** die Stützelemente (4) mittels Hydraulikzylindern (12) anhebbar bzw. absenkbar oder freischalbar sind.

3. Fahrzeug nach Anspruch 1 oder 2, **dadurch gekennzeichnet, dass** an den Stützelementen (4) in den Untergrund eingreifende Stützplatten (11) befestigt sind.

4. Fahrzeug nach einem der Ansprüche 1 bis 3, **dadurch gekennzeichnet, dass** an zumindest einem Stützelement (4) ein freilaufendes und blockierbares oder angetriebenes Rad oder eine Raupe montiert ist, das oder die gegebenenfalls lenkbar ist.

5. Fahrzeug nach einem der Ansprüche 1 bis 4, **dadurch gekennzeichnet, dass** das betreffende Stützelement (4) während des Einziehens des Verschieberohres (3) anhebbar oder über den Untergrund nachziehbar ist.

6. Fahrzeug nach einem der Ansprüche 1 bis 5, **dadurch gekennzeichnet, dass** die Einziehgeschwindigkeit der Verschieberohre (3) größer ist als deren Ausfahrgeschwindigkeit.

7. Fahrzeug nach einem der Ansprüche 1 bis 6, **dadurch gekennzeichnet, dass** die Achskonstruktion Räder oder Raupen im Bereich des freien Endes der Fixrohre (5) aufweist.

8. Fahrzeug nach einem der Ansprüche 1 bis 7, **dadurch gekennzeichnet, dass** die Achskonstruktion beweglich mit den Fixrohren (5) verbunden ist.

9. Fahrzeug nach einem der Ansprüche 1 bis 8, **dadurch gekennzeichnet, dass** die Achskonstruktion eine lenkbare Achse (1) aufweist.

10. Fahrzeug nach Anspruch 9, **dadurch gekennzeichnet, dass** die Achse (1) frei laufend ist.

11. Fahrzeug nach Anspruch 9, **dadurch gekennzeichnet, dass** die Achse (1) angetrieben ist.

12. Fahrzeug nach Anspruch 11, **dadurch gekennzeichnet, dass** die Winkelgeschwindigkeit der Räder (1) bzw. die Antriebsgeschwindigkeit der Raupen und die Schreitgeschwindigkeit der Schreitelemente, d. h. der Verschieberohre (3) und Stützelemente (4), mittels einer zuschaltbaren Steuerelektronik aufeinander abstimmbar sind.

13. Fahrzeug nach Anspruch 12, **dadurch gekennzeichnet, dass** mittels der Steuerelektronik beim Schreiten eine konstante Fortbewegungsgeschwindigkeit erreichbar ist.

14. Fahrzeug nach einem der Ansprüche 1 bis 13, **dadurch gekennzeichnet, dass** im Bereich des freien Endes der Fixrohre (5) ein Oberwagen (6) gelenkig angeordnet ist.

15. Fahrzeug nach Anspruch 14, **dadurch gekennzeichnet, dass** am Oberwagen (6) eine Fahrerkabine (8) angeordnet ist.

16. Fahrzeug nach Anspruch 14 oder 15, **dadurch gekennzeichnet, dass** am Oberwagen (6) ein Kranausleger (7) angeordnet ist.

17. Fahrzeug nach Anspruch 16, **dadurch gekennzeichnet, dass** am Kranausleger (7) ein Harvesterkopf, eine Baggerschaufel oder andere Geräte befestigbar sind.

18. Fahrzeug nach einem der Ansprüche 1 bis 17, **dadurch gekennzeichnet, dass** am Fahrzeugrahmen (2) eine Ladeplattform oder Zusatzgeräte angebracht sind.

## Claims

1. All-terrain vehicle with a vehicle frame, a drive assembly, an axle structure with wheels or tracked running gear and with pipes which can telescope roughly parallel to the subsoil and which are each composed of a fixed pipe (5) and a movable pipe (3), on the free end of the movable pipes (3) there being one support element (4) each, **characterized in that** the vehicle frame (2) consists essentially of two pipes which can be telescoped roughly parallel to the subsoil, which are arranged parallel to one another and form walking members, that the movable pipes (3) can be extended and retracted mechanically or hydraulically in alternation or at the same time in the fixed pipes (5), and that the support elements (4) are supported in the plane of the lengthwise axis of the telescoping pipe to be able to pivot around a bearing point (10).

2. Vehicle as claimed in claim 1, wherein the support elements (4) can be raised or lowered or enabled by means of hydraulic cylinders (12).

3. Vehicle as claimed in claim 1 or 2, wherein support plates (11) which engage the subsoil are mounted on the support elements (4).

4. Vehicle as claimed in one of claims 1 to 3, wherein on at least one support element (4) a free-running and lockable or driven wheel or a track is mounted which can optionally be steered.

5. Vehicle as claimed in one of claims 1 to 4, wherein the pertinent support element (4) can be raised during retraction of the movable pipe (3) or can be pulled behind over the subsoil.

6. Vehicle as claimed in one of claims 1 to 5, wherein the retraction speed of the movable pipes (3) is greater than their extension speed.

7. Vehicle as claimed in one of claims 1 to 6, wherein the axle structure has wheels or tracks in the area of the free end of the fixed pipes (5).

8. Vehicle as claimed in one of claims 1 to 7, wherein the axle structure is movably connected to the fixed pipes (5).

9. Vehicle as claimed in one of claims 1 to 8, wherein the axle structure has a steerable axle (1).

10. Vehicle as claimed in claim 9, wherein the axle (1) is freely running.

11. Vehicle as claimed in claim 9, wherein the axle (1) is driven.

12. Vehicle as claimed in claim 11, wherein the angular speed of the wheels (1) or the drive speed of the tracks and the walking speed of the walking elements, i.e. the movable pipes (3) and support elements (4), can be matched to one another by means of connectable control electronics.

13. Vehicle as claimed in claim 12, wherein a constant speed of progression can be achieved by means of the control electronics during walking.

14. Vehicle as claimed in one of claims 1 to 13, wherein a superstructure (6) is located articulated in the area of the free end of the fixed pipes (5).

15. Vehicle as claimed in claim 14, wherein there is a driver's cab (8) on the superstructure (6).

16. Vehicle as claimed in claim 14 or 15, wherein there is a crane jib (7) on the superstructure (6).

17. Vehicle as claimed in claim 16, wherein a harvester head, a drag, or other devices can be mounted on the crane jib (7).

18. Vehicle as claimed in one of claims 1 to 17, wherein a handling platform or auxiliary devices are attached to the vehicle frame (2).

## Revendications

1. Véhicule tout-terrain avec châssis de véhicule, mécanisme d'entraînement, système d'essieux à roues ou trains de chenilles et avec tubes télescopiques à peu près parallèles au sol, chacun composé d'un tube fixe (5) et d'un tube coulissant (3), un élément d'assise étant disposé à l'extrémité libre de chaque tube coulissant (3), **caractérisé en ce que** le châssis du véhicule (2) se compose essentiellement des deux tubes télescopiques à peu près parallèles au sol, qui sont disposés parallèlement l'un par rapport à l'autre et constituent des organes marcheurs, que les tubes coulissants (3) peuvent être déployés et repliés alternativement ou simultanément par voie mécanique ou hydraulique (3) et que les éléments d'assise (4) pivotent sur un palier autour d'un point d'appui (10) sur le plan de l'axe longitudinal du tube télescopique.

2. Véhicule selon la revendication 1, **caractérisé en ce que** les éléments d'assise (4) peuvent être relevés et abaissés ou relâchés moyennant des cylindres hydrauliques (12).

3. Véhicule selon la revendication 1 ou 2, **caractérisé en ce que** des plaques d'assise (11) s'agrippant au sol sont fixées aux éléments d'assise (4).

4. Véhicule selon une des revendications de 1 à 3, **caractérisé en ce qu'**une roue libre et pouvant être bloquée ou entraînée ou une chenille, qui le cas échéant sont dirigeables, sont montées sur au moins un élément d'assise (4).

5. Véhicule selon une des revendications de 1 à 4, **caractérisé en ce qu'**on peut relever ou traîner sur le sol l'élément d'assise (4) en question pendant qu'on replie le tube coulissant (3).

6. Véhicule selon une des revendications de 1 à 5, **caractérisé en ce que** la vitesse de repliement des tubes coulissants (3) est supérieure à leur vitesse de déploiement.

7. Véhicule selon une des revendications de 1 à 6, **caractérisé en ce que** le système d'essieux comporte des roues ou des chenilles à l'extrémité libre des tubes fixes (5).

8. Véhicule selon une des revendications de 1 à 7, **caractérisé en ce que** le système d'essieux est relié de façon mobile aux tubes fixes.

9. Véhicule selon une des revendications de 1 à 8, **caractérisé en ce que** le système d'essieux comporte un essieu dirigeable (1).

10. Véhicule selon la revendication 9, **caractérisé en ce que** l'essieu (1) est libre.

11. Véhicule selon la revendication 9, **caractérisé en ce que** l'essieu (1) est un essieu moteur.

12. Véhicule selon la revendication 11, **caractérisé en ce que** la vitesse angulaire des roues (1) et la vitesse de translation des chenilles ainsi que la vitesse de marche des éléments marcheurs, c.-à-d. des tubes à coulisse (3) et des éléments d'assise (4), peuvent être adaptées entre elles moyennant une électronique de commande pouvant être intégrée.

13. Véhicule selon la revendication 12, **caractérisé en ce qu'**on peut obtenir une vitesse de translation constante de marche moyennant l'électronique de commande.

14. Véhicule selon une des revendications de 1 à 13, **caractérisé en ce qu'**un châssis tournant (6) est disposé de façon articulée à l'extrémité libre des tubes fixes.

15. Véhicule selon la revendication 14, **caractérisé en ce qu'**une cabine de conducteur (8) est disposée sur le châssis tournant (6).

16. Véhicule selon la revendication 14 ou 15, **caractérisé en ce qu'**un bras de grue (7) est disposé sur le châssis tournant.

17. Véhicule selon la revendication 16, **caractérisé en ce qu'**une tête d'abattage, un godet excavateur ou d'autres outils peuvent être fixés sur le bras de grue (7).

18. Véhicule selon une des revendications de 1 à 17, **caractérisé en ce qu'**une plate-forme de chargement ou des outils supplémentaires sont fixés sur le châssis (2).
